# EUROPÄISCHE PATENTSCHRIFT

(11) **EP 2 755 788 B1**
(45) Veröffentlichungstag und Bekanntmachung des Hinweises auf die Patenterteilung: **30.05.2018**
(21) Anmeldenummer: 12759118.8
(22) Anmeldetag: 13.09.2012
(51) Int. Cl.: B23F 19/05, B23Q 11/10

(54) **HONMASCHINE MIT ÖLDICHTER ARBEITSWANNE**
HONING MACHINE COMPRISING OIL-PROOF WORKING CHAMBER
MACHINE DE RODAGE PRÉSENTANT UNE CUVE DE TRAVAIL ÉTANCHE À L'HUILE

(30) Priorität: 16.09.2011 DE 102011082869
(43) Veröffentlichungstag der Anmeldung: 23.07.2014
(73) Patentinhaber: FELSOMAT GmbH & Co. KG, 75203 Königsbach-Stein (DE)
(72) Erfinder: JÄGER, Helmut, F., 8706 Meilen (CH)
(74) Vertreter: Kohler Schmid Möbus Patentanwälte
(86) Internationale Anmeldenummer: PCT/EP2012/067968
(87) Internationale Veröffentlichungsnummer: WO 2013/037897

(56) Entgegenhaltungen:
- DE-A1- 10 011 941
- DE-A1-102005 005 993
- DE-U1- 20 107 369
- JP-A- 2002 126 967
- JP-A- 2004 042 178
- US-A- 6 164 881
- KOBIALKA C., SCHÄFERLING K-J.,TÜRICH A: "Serienfertigung laufruhiger und hochbelastbarer Zahnräder", WERKSTATT UND BETRIEB, 30. Juni 2011 (2011-06-30), Seiten 44-48, XP002694167, München

## Beschreibung

Die Erfindung betrifft eine Honmaschine, umfassend
- eine motorisch verfahrbare Werkstückspindel mit einem Spindelhals und einem Spindelkopf,
- eine Werkzeugspindel für einen Honring, und
- ein Maschinengehäuse, in welchem die Werkstückspindel und die Werkzeugspindel angeordnet sind.

Eine solche Honmaschine ist beispielsweise bekannt geworden durch die DE 10 2005 005 993 A1.

Beim Honen werden bei einem verzahnten Werkstück, etwa einem Zahnrad oder einem Getriebe, die Zahnflanken auf einem so genannten Honring, welcher meist aus einem keramischen Material besteht oder mit einem keramischen Material beschichtet ist, abgewälzt. Dadurch wird Material von den Zahnflanken des Werkstücks abgetragen. Der Honring besitzt eine kreisringförmige Grundform und weist seinerseits radial nach innen gerichtete Zahnflanken auf. Während des Abwälzens von Werkstück und Honring wird der Honring mittels einer Werkzeugspindel rotiert; ebenso wird das Werkstück mittels einer Werkstückspindel rotiert.

Beim Abwälzen von Honring und Werkstück entsteht in erheblichem Maß Wärme. Um eine Überhitzung von Honring und Werkstück zu vermeiden, werden diese mittels eines Öls gekühlt. Das Öl wird dabei meist auf den Kontaktbereich von Honring und Werkstück unter hohem Druck aufgesprüht. Das Öl schwemmt dabei gleichzeitig auch Späne und Abrieb weg.

Durch das Aufsprühen des Öls auf den schnell rotierenden Honring und das noch schneller rotierende Werkstück entsteht ein feiner Ölnebel, der sich in der Honmaschine verbreitet und sich praktisch überall in der Honmaschine niederschlägt, beispielsweise an den Innenwänden und der Decke des Maschinengehäuses. Werkstücke sind nach der Honbearbeitung regelmäßig stark ölbenetzt und müssen gegebenenfalls vor einer weiteren Bearbeitung einer Wäsche unterzogen werden. Die Honmaschine kann insgesamt zu einer erheblichen Schmutzquelle in einer Fertigungsstraße werden.

Im Stand der Technik, etwa bei der "SynchroFine 205 HS", Firmendruckschrift der PRÄWEMA Antriebstechnik GmbH, Eschwege/Werra, DE, werden durch Zwischenwände Teile einer Honmaschine, etwa der Bereich der Werkstückzuführung, bezüglich der Werkzeugspindel abgeschattet, um die Ausbreitung des Ölnebels einzudämmen.

Aus der DE 100 11 941 A1 ist eine Bearbeitungsmaschine zur materialabtragenden Bearbeitung eines Werkstücks bekannt, die eine gehäuseartige Abschirmung aufweist, die durch eine Wanne und einen die Wanne verschließenden Deckel ausgebildet ist. Innerhalb der Wanne ist eine Halterung für ein Werkstück vorgesehen. Weiterhin ist ein in mindestens einer Ebene relativ zum Werkstück verfahrbarer Werkzeughalter vorgesehen. Dabei ist der die Wanne verschließende Deckel in der Verfahrebene des Werkzeughalters beweglich ausgebildet, wobei der Werkzeughalter unter Abdichtung einer für ihn darin vorgesehenen Durchbrechung durch den Deckel in die Abschirmung eintaucht und den Deckel beim Verfahren in der Verfahrebene mitnimmt. Die Abdichtung dient hier der Rückhaltung von bei der materialabtragenden Bearbeitung anfallendem Material, insbesondere feinen Graphitstäuben. Um beim Verfahren des Werkzeughalters die Dichtwirkung des Deckels nicht zu verlieren, weist dieser einen Überstand über den Rand der Wanne hinaus auf, wodurch ein zusätzlicher Platzbedarf entsteht. In einer Weiterbildung der Bearbeitungsmaschine sind mehrere durchbrochene Deckel übereinander gestapelt angeordnet, um den Überstand zu vermeiden. An dem Werkzeughalter ist ferner ein Abschirmkragen ausgebildet, der beim Verfahren des Werkzeughalters nach oben aus der Wanne heraus den Deckel anhebt.

Die JP 2002 126967 A beschreibt eine Maschine zur Trockenzerspanung mit einer Einrichtung zum Sammeln der bei der Bearbeitung anfallenden Späne. Dazu ragt eine Werkzeugspindel von oben in eine über einem Werkstück angeordnete Haube hinein. Die Verschieblichkeit der Werkzeugspindel in einer horizontalen Verfahrebene wird ermöglicht, indem an einer Oberseite der Haube eine Deckplatte mit einer Durchbrechung für die Werkzeugspindel vorgesehen ist, wobei die Deckplatte durch zwei orthogonal zueinander orientierte, flächenhafte Faltenbalge beweglich gegenüber der Haube gehalten wird. Die bei der Zerspanung anfallenden Späne werden von der mittels der Faltenbalge nach oben verschlossenen Haube zurückgehalten und mit einer Absaugeinrichtung gesammelt und abgeschieden.

Aus der US 6 164 881 A ist eine Werkzeugmaschine bekannt, die einen Arbeitstisch zur Aufnahme eines Werkstücks und eine darüber angeordnete, bewegliche Werkzeugspindel mit einem Werkzeug zur spanenden Bearbeitung aufweist, wobei der Arbeitstisch und ein Kopf der Werkzeugspindel durch eine Umbauung sowie eine ausdehnbare und zusammenziehbare Abdeckung umschlossen sind, so dass anfallende Späne in einem dadurch gebildeten Innenraum der Werkzeugmaschine zurückgehalten werden. Zur Ausbildung der Abdeckung werden verschiedene Varianten vorgeschlagen, insbesondere Faltenbalge, Bögen aus elastischen Materialien oder mehrlagige Anordnungen von gegeneinander verschieblichen Platten. Insbesondere ist ein oberes Ende der Abdeckung derart am Spindelkopf befestigt, dass es zum Wechseln des Werkzeugs manuell vom Spindelkopf gelöst werden muss.

Die DE 10 2005 005 993 A1 beschriebt eine Honmaschine zur Feinbearbeitung von gezahnten Werkstücken, insbesondere von Zahnrädern, mit mindestens einer Werkstückspindel mit vertikaler Spindelachse und mindestens einem innenverzahnten Honwerkzeug an einem Maschinengestell, wobei die Werkzeugspindel oberhalb des Honwerkzeugs über einen Horizontalschlitten und einen Vertikalschlitten in horizontaler und vertikaler Richtung bewegbar angeordnet ist. Durch die Anordnung der Werkstückspindel oberhalb des Honwerkzeugs können bei der Bearbeitung anfallende Späne und Werkzeugabrieb ungehindert nach unten fallen.

### Aufgabe der Erfindung

Der Erfindung liegt die Aufgabe zugrunde, eine Honmaschine zu schaffen, bei der eine Ausbreitung von Ölnebel besser eingedämmt ist, und wobei gleichzeitig eine kompakte Bauform der Werkzeugspindel erzielt wird.

### Kurze Beschreibung der Erfindung

Diese Aufgabe wird gelöst durch eine Honmaschine der eingangs genannten Art, die dadurch gekennzeichnet ist,
dass innerhalb des Maschinengehäuses eine Arbeitswanne angeordnet ist, welche die Werkzeugspindel öldicht umschließt,
dass die Arbeitswanne eine Blende mit einer Ausnehmung aufweist, wobei die Werkstückspindel mit dem Spindelkopf durch die Ausnehmung in die Arbeitswanne einführbar ist, so dass der Spindelhals der Werkstückspindel die Ausnehmung öldicht verschließt,
dass die Blende an der Arbeitswanne öldicht verschieblich gelagert ist, so dass die Blende während einer Zustellbewegung der Werkstückspindel relativ zur Werkzeugspindel mitgeführt wird,
und dass die Werkzeugspindel einen topfförmigen Halter für den Honring aufweist, wobei eine offene Seite des topfförmigen Halters der Ausnehmung zugewandt ist, und eine der offenen Seite gegenüberliegende, geschlossene Seite des topfförmigen Halters an einem Antriebsmotor der Werkzeugspindel befestigt ist.

Gemäß der vorliegenden Erfindung wird die Werkzeugspindel von einer Arbeitswanne umschlossen, welche den Ölnebel auf ihren Innenraum begrenzt. Die Arbeitswanne ist dabei innerhalb des Maschinengehäuses angeordnet und unabhängig vom Maschinengehäuse ausgebildet.

Für den Zugang der Werkstückspindel bzw. eines an ihr getragenen Werkstücks zur Arbeitswanne ist eine Blende mit einer Ausnehmung (Öffnung) vorgesehen. In die Ausnehmung kann die Werkstückspindel mit befestigtem Werkstück eingeführt werden, so dass dann der Spindelhals die Ausnehmung vollständig öldicht verschließt. Solange der Spindelhals die Öffnung verschließt, können in der Arbeitswanne ölnebelträchtige Vorgänge stattfinden, etwa das Aufsprühen von Öl in den Kontaktbereich von Honring und Werkstück bei der eigentlichen Honbearbeitung, oder auch das Abschleudern von Öl vom Werkstück. Die Werkstückspindel behält im eingeführten Zustand die für eine Zustellbewegung zum Honing nötige Bewegungsfreiheit, da die Blende an der übrigen Arbeitswanne verschiebbar gelagert ist.

Am Rand der Ausnehmung der Blende und im Bereich des Lagers der Blende können Dichtungen, etwa aus Gummi, vorgesehen sein, um die Öldichtigkeit herzustellen. Die Arbeitswanne verfügt typischerweise noch über einen abnehmbaren Deckel oder eine Tür, um bei Verschleiß oder einem Wechsel des Werkstücktypus den Honring austauschen zu können. Auch dieser Deckel oder die Tür kann mit Dichtungen, etwa aus Gummi, abgedichtet sein. Die Arbeitswanne ist typischerweise ganz oder teilweise aus Blech, insbesondere Stahlblech, gefertigt.

Mittels der öldichten Arbeitswanne kann ein Niederschlag von Ölnebel an den Innenwänden und der Decke des Maschinengehäuses verhindert werden; ein Niederschlag oder Aufschleudern von Öl kann auf den Innenbereich der Arbeitswanne begrenzt werden. Durch Abschleudern von Öl noch innerhalb der Arbeitswanne bei durch die Werkstückspindel verschlossener Ausnehmung der Blende können zudem auf einfache Weise sehr saubere Werkstücke erhalten werden, was für sich an die Honbearbeitung anschließende Prozesse oft vorteilhaft ist.

Durch die Begrenzung des Ölnebels auf den Innenraum der Arbeitswanne werden auch große Teile der Honmaschine vor der Gefahr von Explosionen eines Öl-Luftgemisches geschützt. Durch die Anordnung der Arbeitswanne im Maschinengehäuse fungieren die Wände und Decken des Maschinengehäuses im Explosionsfall zusätzlich als Schutzwand.

Gemäß der vorliegenden Erfindung ist vorgesehen, dass die Werkzeugspindel einen topfförmigen Halter für den Honring aufweist, wobei eine offene Seite des topfförmigen Halters der Ausnehmung zugewandt ist, und eine der offenen Seite gegenüberliegende, geschlossene Seite des topfförmigen Halters an einem Antriebsmotor der Werkzeugspindel befestigt ist. Dadurch kann ein kompakter Bau der Werkzeugspindel erreicht werden, insbesondere im Vergleich zu einem Halter, der über einen radial außen an einem umlaufenden Seitenteil des Halters gelegenen Motor angetrieben wird. Die Befestigung des Antriebsmotors an der geschlossenen Seite erfolgt typischerweise über eine Welle, die an der geschlossenen Seite ausgebildet oder befestigt ist. Bei Verwendung eines Arbeitstrichters kann dessen Innenraum optimal genutzt werden. Es ist außerdem möglich, im Bodenteil des Halters, welcher die geschlossene Seite ausbildet, Teile eines Hydrauliksystems zum Einspannen des Honrings unterzubringen, wodurch ebenfalls ein kompakter Bau befördert wird. Das Bodenteil ist bevorzugt durchgehend ausgebildet, kann aber auch Ausnehmungen oder Löcher aufweisen; das Bodenteil stabilisiert den Halter mechanisch.

### Bevorzugte Ausführunqsformen der Erfindung

Bei einer vorteilhaften Ausführungsform der erfindungsgemäßen Honmaschine ist die Werkzeugspindel bezüglich ihrer Spindelachse vertikal ausgerichtet. Dies erleichtert die Lagerung der Werkstückspindel, und die Werkzeugspindel kann besonders einfach im Pick-Up-Verfahren durch eine mit ihrer Spindelachse ebenfalls vertikal ausgerichteten Werkstückspindel beschickt werden.

Bevorzugt ist auch eine Ausführungsform, bei der die Arbeitswanne als Arbeitstrichter ausgebildet ist. Bei der Trichterform kann ein motorischer Antrieb (etwa ein Elektromotor) platzsparend im engen Bereich des Trichters angeordnet werden. Der enge Trichterbereich zeigt typischerweise nach unten; in diesem Fall kann auch benutztes Öl leicht gesammelt werden.

Vorteilhaft ist eine Weiterbildung dieser Ausführungsform, bei der der Arbeitstrichter einen bevorzugt zentralen, unteren Ölablauf aufweist. Durch den unteren Ölablauf kann benutztes Öl leicht entfernt werden; eine (in radialer Hinsicht) zentrale Position hat sich in der Praxis bewährt, es ist aber auch ein nicht-zentral angeordneter Ölablauf möglich. Falls gewünscht, kann das entfernte Öl nach einer Reinigung oder Aufbereitung wieder im Honprozess eingesetzt werden.

Eine besonders bevorzugte Ausführungsform sieht vor, dass der Innenraum der Arbeitswanne maximal 3 mal, bevorzugt maximal 2 mal, so groß ist wie der von der Werkzeugspindel in der Arbeitswanne benötigte Raum. Dadurch wird der durch Ölnebel verschmutzbare Raum klein gehalten. Mit einem etwa 2 mal so großen Innenraum der Arbeitswanne im Vergleich zum von der Werkzeugspindel eingenommenen Raum wurden in der Praxis gute Erfahrungen gemacht; alle nötigen Bauteile können in der Arbeitswanne noch gut untergebracht werden. Ein durch Explosion grundsätzlich gefährdeter Raum wird minimiert.

Vorteilhaft ist auch eine Ausführungsform, bei der die Arbeitswanne an eine Explosionsentlastungsleitung angeschlossen ist,
insbesondere wobei die Explosionsentlastungsleitung in einen Bereich oberhalb der Honmaschine führt. Durch die Explosionsentlastungsleitung wird verhindert, dass die Wände der Arbeitswanne im Falle einer Explosion gesprengt oder auseinandergerissen werden; die Druckwelle kann durch die Entlastungsleitung entweichen. Dadurch werden die Arbeiter in der Umgebung besser geschützt. Oberhalb der Honmaschine (insbesondere im Bereich des Daches eines Gebäudes, in welchem die Honmaschine aufgestellt ist) halten sich in der Regel keine Arbeiter auf, wodurch sich die Sicherheit bei entsprechend dorthin geführter Explosionsentlastungsleitung weiter erhöht.

Vorteilhaft ist eine Ausführungsform, bei der die Werkstückspindel dazu ausgebildet ist, ein am Spindelkopf gehaltenes Werkstück mit einer Drehzahl von 10000 U/min oder mehr, bevorzugt 15000 U/min oder mehr, zu drehen. Durch diese hohe Drehzahl können Werkstücke trockengeschleudert werden, d.h. es verbleibt keine nennenswerte Menge an Öl (und Schmutz) mehr am Werkstück.

Eine besonders bevorzugte Ausführungsform der erfindungsgemäßen Honmaschine sieht vor,
dass die Honmaschine eine elektronische Steuerung aufweist, mit der zumindest die Verfahrbewegung und die Drehzahl der Werkstückspindel gesteuert werden können,
und dass die elektronische Steuerung dazu programmiert ist, nach einer Honbearbeitung eines am Spindelkopf der Werkstückspindel gehaltenen Werkstücks das Werkstück in der öldichten Arbeitswanne mit hoher Drehzahl zu schleudern. Bei der Honbearbeitung wird das Werkstück mit Öl (und Schmutz) benetzt. Durch das Schleudern mit hoher Drehzahl kann das Werkstück getrocknet (und gesäubert) werden. Dabei wird das Öl nur im Inneren der Arbeitswanne (und nicht im Maschinengehäuse, und insbesondere nicht an den Maschinengehäusewänden und der Maschinengehäusedecke) verteilt, da der Spindelhals die Ausnehmung der Blende verschließt. Das Trockenschleudern erfolgt ohne Eingriff mit dem Honring. Im Rahmen der Erfindung gelten insbesondere Drehzahlen von 5000 U/min als hoch; bevorzugt liegt die Drehzahl beim (Trocken-)Schleudern bei wenigstens 10.000 U/min. Bei einer bevorzugten Weiterbildung dieser Ausführungsform ist die elektronische Steuerung dazu programmiert, beim Schleudern des Werkstücks eine höhere Drehzahl anzusteuern als bei der vorangegangenen Honbearbeitung des Werkstücks. Dadurch kann die Trocknung und Reinigung des Werkstücks verbessert werden. Falls gewünscht, kann die Trocknung (und Reinigung) beim Schleudern auch durch Einblasen von Druckluft verbessert werden; man beachte, dass Druckluft dabei grundsätzlich in jedem Drehzahlbereich eingesetzt werden kann.
Ebenfalls in den Rahmen der vorliegenden Erfindung fällt die Verwendung der obigen Ausführungsform oder ihrer obigen Weiterbildung gemäß der Programmierung der elektronischen Steuerung. Durch das Schleudern nach der vorangegangenen Honbearbeitung können besonders saubere und trockene Werkstücke erhalten werden.

### Detaillierte Beschreibung der Erfindung und Zeichnung

Die Erfindung ist in der Zeichnung dargestellt und wird anhand von Ausführungsbeispielen näher erläutert. Es zeigen:
- Fig. 1: eine schematische Seitenansicht einer erfindungsgemäßen Honmaschine;
- Fig. 2a: einen schematischen vertikalen Querschnitt durch die Werkzeugspindel in der Arbeitswanne von Fig. 1, mit ausgefahrener Werkstückspindel;
- Fig. 2b: einen schematischen vertikalen Querschnitt durch die Werkzeugspindel in der Arbeitswanne von Fig. 1, mit eingefahrener Werkstückspindel, aber ohne Eingriff des Werkstücks in den Honring;
- Fig. 2c: einen schematischen vertikalen Querschnitt durch die Werkzeugspindel in der Arbeitswanne von Fig. 1, mit eingefahrener Werkstückspindel, mit Eingriff des Werkstücks in den Honring;
- Fig. 3: einen schematischen horizontalen Schnitt durch den topfförmigen Halter aus der Werkzeugspindel von Fig. 2 auf Höhe eines umlaufenden hydraulischen Dichtelements, mit zusätzlicher Markierung von unter der Schnittebene liegenden Strukturen.

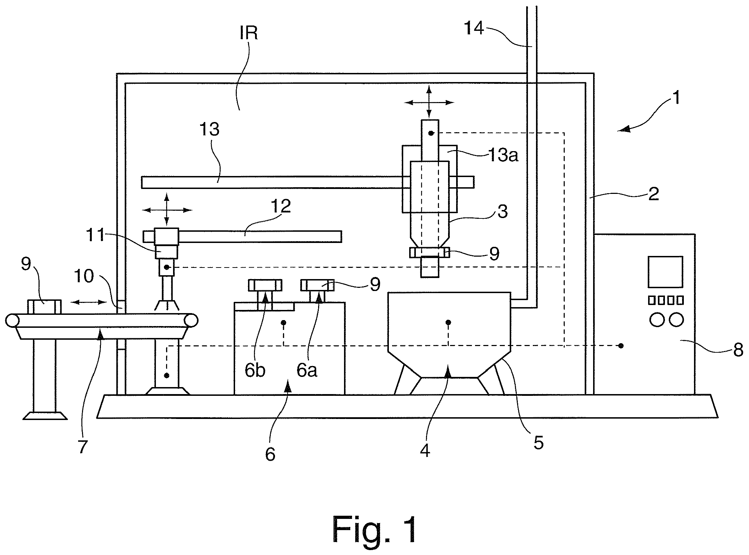

Die **Fig. 1** zeigt eine erfindungsgemäße Honmaschine 1, umfassend eine Werkstückspindel 3 und eine Werkzeugspindel 4, wobei die Werkzeugspindel 4 in einer öldichten Arbeitswanne 5 angeordnet ist und daher in Fig. 1 verdeckt wird, weiterhin umfassend eine Prüfstation 6, eine Beladestation 7 und eine elektronische Steuerung 8. In der gezeigten Ausführungsform sind die elektronische Steuerung 8 und ein Teil der Beladestation 7 außerhalb eines Maschinengehäuses 2 der Honmaschine 1 angeordnet; die übrigen Baugruppen sind innerhalb des Maschinengehäuses 2 angeordnet. Zum Maschinengehäuse 2 gehören hier Seitenwände, eine Decke und eine Bodenplatte, die einen Innenraum IR umschließen.

Werkstücke 9, die an der Beladestation 7 in nicht näher dargestellter Weise angeliefert werden, werden mittels eines Förderbandsystems der Beladestation 7 durch eine Öffnung 10 im Maschinengehäuse 2 in den Innenraum IR verbracht. Dort kann mit einem vertikal teleskopierbaren Greifer 11, welcher auf einem Portalsystem 12 horizontal verfahrbar ist, das Werkstück 9 ergriffen und zur Prüfstation 6 verbracht und auf einen Prüfhalter 6a aufgesetzt werden. Ein Meisterrad 6b kann sodann an das Werkstück 9 auf dem Prüfhalter 6a horizontal herangefahren und an diesem abgewälzt werden. Aus der Verfahrposition des Meisterrads 6b beim Abwälzen kann auf die Qualität des Werkstücks 9 geschlossen werden. Ein für die weitere Bearbeitung als ungeeignet befundenes Werkstück 9 wird vom Greifer 11 zurück zur Beladestation 7 verbracht und ausgeschafft.

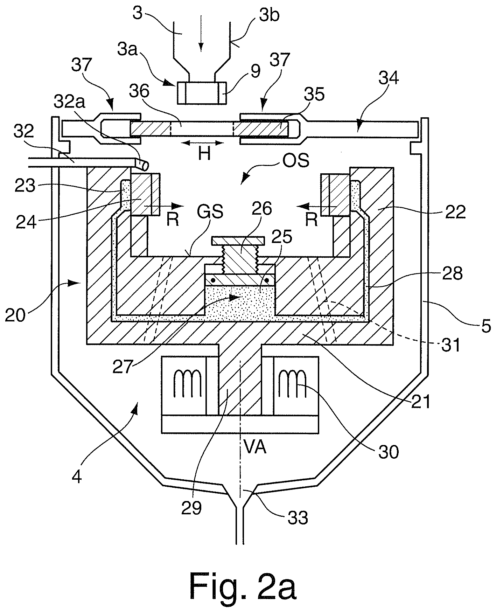

Ein für die Honbearbeitung als geeignet befundenes Werkstück 9 wird von der Werkstückspindel 3 im Pick-Up-Verfahren ergriffen, unter Beteiligung eines Portalsystems 13 (umfassend einen Kreuzschlitten 13a, so dass die Werkstückspindel 3 horizontal und vertikal verfahren werden kann) zur ortsfesten Werkzeugspindel 4 verbracht und dort einer Honbearbeitung unterzogen (siehe dazu Fig. 2a-2c). Anschließend wird das Werkstück 9 von der Werkstückspindel 3 mittels des Portalsystems 13 zurück zur Beladestation 7 verbracht und ausgeschafft.

Die elektronische Steuerung 8 kontrolliert dabei die Beladestation 7, die Prüfstation 6, den Greifer 11 einschließlich Portalsystem 12, die Werkstückspindel 3 (auch in Hinblick auf die Drehzahl und die relative Phase) einschließlich Portalsystem 13 und auch die Werkzeugspindel 4 (in Hinblick auf die Drehzahl und die relative Phase), vgl. die gestrichelt eingezeichneten Überwachungs- und Steuerleitungen. Der elektronischen Steuerung obliegen in der dargestellten Ausführungsform die Koordination der Werkstücktransporte, die Wälzprüfung und die Durchführung der Honbearbeitung einschließlich Schleudern (siehe unten). Man beachte, dass die elektronische Steuerung 8 bei einer alternativen Bauform auch im Maschinengehäuse 2 angeordnet sein kann.

Die Werkzeugspindel 4 ist in der hier trichterförmig ausgebildeten Arbeitswanne 5 angeordnet. Die Arbeitswanne 5 verfügt (mit Ausnahme einer Ausnehmung für die Werkstückspindel 3, siehe unten) allseitig über eigene, öldichte Begrenzungen bevorzugt aus Stahlblech und hat insbesondere keine Wände mit den Wänden des Maschinengehäuses 2 (einschließlich Decke und Bodenplatte) gemein. Die Arbeitswanne 5 ist hier auf Stellfüßen gelagert. Die Arbeitswanne 5 verfügt über eine Explosionsentlastungsleitung 14, welche nach oberhalb der Honmaschine 1 führt, bevorzugt durch ein Gebäudedach hindurch ins Freie.

**Fig. 2a** zeigt den Bereich der Werkzeugspindel 4 in der Arbeitswanne 5 von Fig. 1 im Detail.

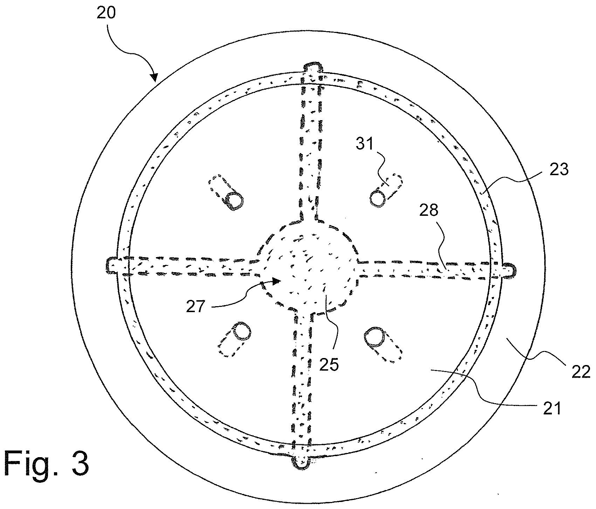

Die Werkzeugspindel 4 umfasst einen topfförmigen Halter 20, der hier mit seiner offenen Seite OS nach oben und seiner geschlossenen Seite GS nach unten ausgerichtet ist. Der topfförmige Halter 20 verfügt entsprechend über ein Bodenteil 21 und ein umlaufendes Seitenteil 22. Das umlaufende Seitenteil 22 weist an seiner Innenseite ein umlaufendes, hydraulisches Dehnelement 23 auf, mit dem ein Honring 24 in radialer Richtung R eingespannt und im Halter 20 zentriert werden kann; bei steigendem Druck eines gepunktet dargestellten Hydraulikmediums 25 dehnt sich das Dehnelement 23 radial nach innen aus und umgekehrt. Der Druck des Hydraulikmediums 25 kann über ein Stellelement (hier eine Stellschraube 26, welche das mit Hydraulikmedium 25 befüllte Teilvolumen einer Hydraulikkammer 27 bestimmt) eingestellt werden. Das hydraulische Dehnelement 23 ist mittels mehrerer Hydraulikleitungen 28 mit der Hydraulikkammer 27 verbunden. Die Hydraulikkammer 27, das Stellelement und teilweise die Hydraulikleitungen 28 sind im Bodenteil 21 angeordnet, so dass die Werkzeugspindel 4 in radialer Richtung (in Fig. 2a in horizontaler Richtung) kompakt ausgebildet werden kann (zum Hydrauliksystem siehe auch Fig. 3).

Der Halter 20 verfügt bodenseitig über eine Welle 29, an der der Halter 20 gelagert ist und über die der Halter 20 mittels eines Antriebsmotors 30, hier Elektromotors, angetrieben werden kann; der Halter 20 (und damit auch der Honring 24) dreht sich für die Honbearbeitung um eine vertikale Achse VA. Im Halter 20 sind weiterhin Ablaufkanäle 31 vorgesehen, durch die Öl aus dem topfförmigen Halter 20 abfließen kann, welches bei der Honbearbeitung über eine nicht am Halter 20 befestigte Ölzuleitung 32 mit einer Öldüse 32a auf den Kontaktbereich von Honring 24 und Werkstück 9 aufgesprüht wird; hierbei kann ein Öldruck von 40 bar und mehr, bevorzugt 60 bar und mehr, eingesetzt werden. Die Arbeitswanne 5 verfügt über einen zentralen, unterseitigen Ablauf 33 für Öl, durch den benutztes Öl ablaufen kann.

Die Arbeitswanne 5 umschließt die Werkzeugspindel 4, umfassend den Halter 20 (einschließlich Welle 29 und Honring 24) und den Antriebsmotor 30, trichterartig. Die Begrenzungswände der Arbeitswanne 5 sind öldicht ausgebildet. Das von der Werkzeugspindel 4 (einschließlich des vom umlaufenden Seitenteil 22 umschlossenen Raumes im "Topf") eingenommene Teilvolumen des Innenraums der Arbeitswanne 5 entspricht hier etwa der Hälfte des gesamten Volumens des Innenraums der Arbeitswanne 5, d.h. der Innenraum der Arbeitswanne 5 ist etwa zweimal so groß wie der von der Werkzeugspindel 4 benötigte Raum.

Die Oberseite der Arbeitswanne 5 wird durch einen Deckel 34 ausgebildet, der in nicht näher dargestellter Weise im Normalbetrieb an der übrigen Arbeitswanne 5 starr und öldicht befestigt ist, und für einen Wechsel des Honrings 24 abgenommen werden kann; die Arbeitswanne 5 hat ansonsten keine Türen oder dergleichen. Der Deckel 34 verfügt über eine Blende 35, die im Deckel 34 in horizontaler Richtung H in einem im Querschnitt beidseits C-förmigen Lager 37 verschieblich gelagert ist. Der Deckel 34 (einschließlich der Blende 35) schließt mit Ausnahme einer Ausnehmung (Öffnung) 36 den oberen Bereich der Arbeitswanne 5 öldicht ab.

Durch die Ausnehmung 36 kann die Werkstückspindel 3 in die Arbeitswanne 5 eingeführt werden. Dazu taucht zunächst ein Spindelkopf 3a der Werkstückspindel 3, der ein Werkstück 9 trägt, in die Ausnehmung 36 ein. In der in Fig. 2a gezeigten Situation muss dazu die Werkstückspindel 3 nach unten verfahren.

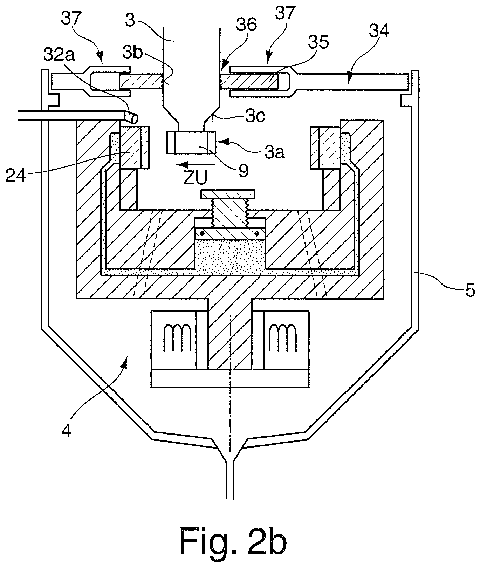

Soweit die Blende 35 mit der Ausnehmung 36 nicht exakt unter der Werkstückspindel 3 steht, wird die Blende 35 über Keilflächen 3c an der Werkstückspindel 3 in ihrem Lager 37 im Deckel 34 ausgerichtet, so dass bei weiterem Absenken der Werkstückspindel 3 schließlich ein Spindelhals 3b die Ausnehmung 36 öldicht verschließt, vgl. **Fig. 2b****.**

Sodann kann das Werkstück 9 durch Verfahren der Werkstückspindel 3 nach links an den Honring 24 zugestellt werden, siehe Pfeil ZU. Dabei wird die Blende 35 in ihrem Lager 37 mitgenommen, also nach links verschoben.

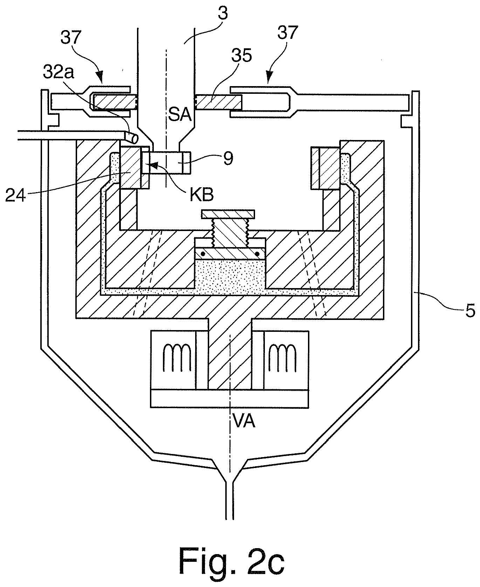

**Fig. 2c** zeigt sodann die Position, in welcher das Werkstück 9, hier ein Zahnrad, mit seiner Zahnflanke vollständig in die Zahnflanke des Honrings 24 eingetaucht ist. In dieser Position werden der Honring 24 um die vertikale Achse VA und das Werkstück 9 um die ebenfalls vertikale Spindelachse SA gedreht und aufeinander abgewälzt. Zumindest während des Abwälzens wird über die Öldüse 32a ein Öl zur Kühlung und zum Ausschwemmen von Abrieb auf den Kontaktbereich KB von Honring (Werkzeug) 24 und Werkstück 9 gesprüht.

Nach der Honbearbeitung des Werkstücks 9 wird dieses mittels der Werkstückspindel 3 wieder in horizontaler Richtung nach rechts zurückgezogen, beispielsweise in die Position von Fig. 2b. Hier kann die Werkstückspindel 3 - bei abgestellter Ölzufuhr an der Öldüse 32a - noch einmal eine hohe Drehzahl mit dem Werkstücks 9 fahren, um das Werkstück 9 trockenzuschleudern. Bevorzugt liegt die Drehzahl beim Trockenschleudern höher als während der Honbearbeitung. Typische Drehzahlen beim Trockenschleudern im Rahmen der Erfindung betragen wenigstens 10.000 U/min. Das Öl, das sich während des Trockenschleuderns vom Werkstück 9 löst, bleibt innerhalb der Arbeitswanne 5, da die Ausnehmung 36 nach wie vor durch den Spindelhals 3b versperrt ist und somit die Arbeitswanne 5 hermetisch abgeschlossen ist. Nach dem Trockenschleudern kann das Werkstück 9 mittels der Werkstückspindel 3 aus der Arbeitswanne 5 durch die Ausnehmung 36 hindurch nach oben zurückgezogen werden.

Die **Fig. 3** illustriert Teile des hydraulischen Systems des Halters 20 in einem horizontalen Schnitt; unterhalb der Schnittebene liegende, verdeckte Strukturen sind gestrichelt eingezeichnet.

An der Innenseite des umlaufenden Seitenteils 22 ist das umlaufende, hydraulische Dehnelement 23 ausgebildet; dieses steht über hier vier sternförmig verlaufende Hydraulikleitungen 28 mit der (in radialer Hinsicht) zentralen Hydraulikkammer 27 im Bodenteil 21 in Verbindung. Über das (einzige) Stellelement (siehe Bzz. 26 der Stellschraube in Fig. 2a), mit dem der Druck in der Hydraulikkammer 27 eingestellt wird, kann über die Hydraulikleitungen 28 der Druck im Dehnelement 23 auf einfache Weise eingestellt werden.

Ebenfalls eingezeichnet sind die Ablaufkanäle 31, mit denen Öl durch das Bodenteil 21 hindurch in den unteren Bereich der Arbeitswanne 5 abgeleitet werden kann. Man beachte, dass die Ablaufkanäle 31 an der Oberseite des Bodenteils 21 auch näher am umlaufenden Seitenteil 22, und insbesondere auch in der Kante zum umlaufenden Seitenteil 22 münden können, um bereits während der Rotation des Halters 20 durch die Zentrifugalkraft nach außen getragenes Öl besser ableiten zu können.

## Patentansprüche

1. Honmaschine (1), umfassend
- eine motorisch verfahrbare Werkstückspindel (3) mit einem Spindelhals (3b) und einem Spindelkopf (3a),
- eine Werkzeugspindel (4) für einen Honring (24), und
- ein Maschinengehäuse (2), in welchem die Werkstückspindel (3) und die Werkzeugspindel (4) angeordnet sind,
**dadurch gekennzeichnet,**
**dass** innerhalb des Maschinengehäuses (2) eine Arbeitswanne (5) angeordnet ist, welche die Werkzeugspindel (4) öldicht umschließt, dass die Arbeitswanne (5) eine Blende (35) mit einer Ausnehmung (36) aufweist, wobei die Werkstückspindel (3) mit dem Spindelkopf (3b) durch die Ausnehmung (36) in die Arbeitswanne (5) einführbar ist, so dass der Spindelhals (3b) der Werkstückspindel (3) die Ausnehmung (36) öldicht verschließt,
**dass** die Blende (35) an der Arbeitswanne (5) öldicht verschieblich gelagert ist, so dass die Blende (35) während einer Zustellbewegung (ZU) der Werkstückspindel (3) relativ zur Werkzeugspindel (4) mitgeführt wird,
und **dass** die Werkzeugspindel (4) einen topfförmigen Halter (20) für den Honring (24) aufweist, wobei eine offene Seite (OS) des topfförmigen Halters (20) der Ausnehmung (36) zugewandt ist, und eine der offenen Seite (OS) gegenüberliegende, geschlossene Seite (GS) des topfförmigen Halters (20) an einem Antriebsmotor (30) der Werkzeugspindel (4) befestigt ist.

2. Honmaschine (1) nach Anspruch 1, **dadurch gekennzeichnet, dass** die Werkzeugspindel (4) bezüglich ihrer Spindelachse (VA) vertikal ausgerichtet ist.

3. Honmaschine (1) nach einem der vorhergehenden Ansprüche, **dadurch gekennzeichnet, dass** die Arbeitswanne (5) als Arbeitstrichter ausgebildet ist.

4. Honmaschine (1) nach Anspruch 3, **dadurch gekennzeichnet, dass** der Arbeitstrichter einen bevorzugt zentralen, unteren Ölablauf (33) aufweist.

5. Honmaschine (1) nach einem der vorhergehenden Ansprüche, **dadurch gekennzeichnet, dass** der Innenraum der Arbeitswanne (5) maximal 3 mal, bevorzugt maximal 2 mal, so groß ist wie der von der Werkzeugspindel (4) in der Arbeitswanne (5) benötigte Raum.

6. Honmaschine (1) nach einem der vorhergehenden Ansprüche, **dadurch gekennzeichnet, dass** die Arbeitswanne (5) an eine Explosionsentlastungsleitung (14) angeschlossen ist, insbesondere wobei die Explosionsentlastungsleitung (14) in einen Bereich oberhalb der Honmaschine (1) führt.

7. Honmaschine (1) nach einem der vorhergehenden Ansprüche, **dadurch gekennzeichnet, dass** die Werkstückspindel (3) dazu ausgebildet ist, ein am Spindelkopf (3a) gehaltenes Werkstück (9) mit einer Drehzahl von 10000 U/min oder mehr, bevorzugt 15000 U/min oder mehr, zu drehen.

8. Honmaschine (1) nach einem der vorhergehenden Ansprüche, **dadurch gekennzeichnet,**
**dass** die Honmaschine (1) eine elektronische Steuerung (8) aufweist, mit der zumindest die Verfahrbewegung und die Drehzahl der Werkstückspindel (3) gesteuert werden können,
und **dass** die elektronische Steuerung (8) dazu programmiert ist, nach einer Honbearbeitung eines am Spindelkopf (3a) der Werkstückspindel (3) gehaltenen Werkstücks (9) das Werkstück (9) in der öldichten Arbeitswanne (5) mit hoher Drehzahl zu schleudern.

9. Honmaschine (1) nach Anspruch 8, **dadurch gekennzeichnet, dass** die elektronische Steuerung (8) dazu programmiert ist, beim Schleudern des Werkstücks (1) eine höhere Drehzahl anzusteuern als bei der vorangegangenen Honbearbeitung des Werkstücks (9).

10. Verwendung einer Honmaschine (1) nach Anspruch 8 oder 9 gemäß der Programmierung der elektronischen Steuerung (8).

## Claims

1. Honing machine (1) comprising
- a workpiece spindle (3) which can be displaced in a motorised manner and which has a spindle neck (3b) and a spindle head (3a),
- a tool spindle (4) for a honing ring (24), and
- a machine housing (2) in which the workpiece spindle (3) and the tool spindle (4) are arranged,
**characterised in that**
there is arranged inside the machine housing (2) a working tank (5) which surrounds the tool spindle (4) in an oil-tight manner, **in that** the working tank (5) has a shutter (35) with an opening (36), wherein the workpiece spindle (3) can be introduced with the spindle head (3b) through the opening (36) into the working tank (5) so that the spindle neck (3b) of the workpiece spindle (3) closes the opening (36) in an oil-tight manner,
**in that** the shutter (35) is displaceably supported on the working tank (5) in an oil-tight manner so that the shutter (35) is carried along during a positioning movement (ZU) of the workpiece spindle (3) relative to the tool spindle (4), and **in that** the tool spindle (4) has a pot-like retention member (20) for the honing ring (24), wherein an open side (OS) of the pot-like retention member (20) faces the opening (36) and a closed side (GS) of the pot-like retention member (20) opposite the open side (OS) is secured to a drive motor (30) of the tool spindle (4).

2. Honing machine (1) as claimed in claim 1, **characterised in that** the tool spindle (4) is orientated vertically with respect to the spindle axis (VA) thereof.

3. Honing machine (1) according to either of the preceding claims, **characterised in that** the working tank (5) is constructed as a working funnel.

4. Honing machine (1) according to claim 3, **characterised in that** the working funnel has a preferably central, lower oil discharge (33).

5. Honing machine (1) according to any one of the preceding claims, **characterised in that** the inner space of the working tank (5) is a maximum of 3 times, preferably a maximum of 2 times, as large as the space required by the tool spindle (4) in the working tank (5).

6. Honing machine (1) according to any one of the preceding claims, **characterised in that** the working tank (5) is connected to an explosion discharge line (14), in particular wherein the explosion discharge line (14) leads into a region above the honing machine (1).

7. Honing machine (1) according to any one of the preceding claims, **characterised in that** the workpiece spindle (3) is constructed to rotate a workpiece (9) which is retained on the spindle head (3a) at a speed of 10000 rpm or more, preferably 15000 rpm or more.

8. Honing machine (1) according to any one of the preceding claims, **characterised in that** the honing machine (1) has an electronic control unit (8) by means of which at least the displacement movement and the speed of the workpiece spindle (3) can be controlled,
and **in that** the electronic control unit (8) is programmed after a honing processing operation of a workpiece (9) which is retained on the spindle head (3a) of the workpiece spindle (3) to spin the workpiece (9) in the oil-tight working tank (5) at high speed.

9. Honing machine (1) according to claim 8, **characterised in that** the electronic control unit (8) is programmed when the workpiece (1) is spun to actuate a higher speed than during the preceding honing processing operation of the workpiece (9) .

10. Use of a honing machine (1) according to claim 8 or 9 in accordance with the programming of the electronic control unit (8).

## Revendications

1. Machine de rodage (1) comprenant
- une broche (3) porte-pièces à faculté de déplacement motorisé, dotée d'un col (3b) et d'une tête (3a),
- une broche (4) porte-outils, destinée à une bague de rodage (24), et
- un carter (2) dans lequel ladite broche (3) porte-pièces et ladite broche (4) porte-outils sont logées,
**caractérisée par le fait**
**qu'**une cuve de travail (5), située à l'intérieur du carter (2) de la machine, entoure la broche (4) porte-outils avec étanchéité à l'huile,
**que** ladite cuve de travail (5) comporte un diaphragme (35) muni d'un évidement (36), la broche (3) porte-pièces pouvant être introduite dans ladite cuve de travail (5) par la tête (3b) de ladite broche, en traversant ledit évidement (36), de façon telle que le col (3b) de ladite broche (3) porte-pièces obture ledit évidement (36) avec étanchéité à l'huile,
**que** le diaphragme (35) est monté à coulissement sur la cuve de travail (5), avec étanchéité à l'huile, de manière que ledit diaphragme (35) soit entraîné au cours d'un mouvement d'avance (ZU) de la broche (3) porte-pièces par rapport à la broche (4) porte-outils,
et **que** la broche (4) porte-outils est pourvue d'un support (20) en forme de pot, dévolu à la bague de rodage (24), sachant qu'un côté ouvert (OS) dudit support (20) en forme de pot est tourné vers l'évidement (36) et qu'un côté fermé (GS) dudit support (20) en forme de pot, situé à l'opposé dudit côté ouvert (OS), est fixé à un moteur d'entraînement (30) de ladite broche (4) porte-outils.

2. Machine de rodage (1) selon la revendication 1, **caractérisée par le fait que** la broche (4) porte-outils est orientée verticalement par rapport à son axe (VA).

3. Machine de rodage (1) selon l'une des revendications précédentes, **caractérisée par le fait que** la cuve de travail (5) est réalisée en tant que trémie de travail.

4. Machine de rodage (1) selon la revendication 3, **caractérisée par le fait que** la trémie de travail présente une évacuation d'huile (33), inférieure et préférentiellement centrale.

5. Machine de rodage (1) selon l'une des revendications précédentes, **caractérisée par le fait que** l'espace interne de la cuve de travail (5) représente au maximum le triple, de préférence au maximum le double de l'espace nécessité par la broche (4) porte-outils dans ladite cuve de travail (5).

6. Machine de rodage (1) selon l'une des revendications précédentes, **caractérisée par le fait que** la cuve de travail (5) est raccordée à un conduit (14) de décharge de déflagrations, lequel conduit (14) de décharge de déflagrations mène, en particulier, à une région située au-dessus de ladite machine de rodage (1).

7. Machine de rodage (1) selon l'une des revendications précédentes, **caractérisée par le fait que** la broche (3) porte-pièces est réalisée en vue de faire tourner une pièce à usiner (9), retenue sur la tête (3a) de ladite broche, à une vitesse de rotation de 10 000 tr/min ou plus, préférentiellement de 15 000 tr/min ou plus.

8. Machine de rodage (1) selon l'une des revendications précédentes, **caractérisée par le fait**
**que** ladite machine de rodage (1) est équipée d'une commande électronique (8), par laquelle au moins le mouvement de déplacement et la vitesse de rotation de la broche (3) porte-pièces peuvent être commandés,
et **que** ladite commande électronique (8) est programmée pour provoquer, à l'issue d'une opération de rodage effectuée sur une pièce à usiner (9) retenue sur la tête (3a) de ladite broche (3) porte-pièces, une centrifugation de ladite pièce à usiner (9), à grande vitesse de rotation, dans la cuve de travail (5) étanche à l'huile.

9. Machine de rodage (1) selon la revendication 8, **caractérisée par le fait que** la commande électronique (8) est programmée pour piloter, au cours de la centrifugation de la pièce à usiner (1), une plus grande vitesse de rotation que lors de l'opération précédente de rodage effectuée sur ladite pièce à usiner (9).

10. Utilisation d'une machine de rodage (1) conforme à la revendication 8 ou 9, suivant la programmation de la commande électronique (8).
